# EUROPEAN PATENT SPECIFICATION

(11) **EP 2 835 344 B1**
(45) Date of publication and mention of the grant of the patent: **03.05.2017**
(21) Application number: 13772857.2
(22) Date of filing: 12.03.2013
(51) Int. Cl.: C01B 3/38, C01B 3/48, H01M 8/04089, H01M 8/0612

(54) **HYDROGEN GENERATING DEVICE AND OPERATION METHOD FOR SAME, AND FUEL CELL SYSTEM**
WASSERSTOFFERZEUGUNGSVORRICHTUNG UND BETRIEBSVERFAHREN DAFÜR SOWIE BRENNSTOFFZELLENSYSTEM
DISPOSITIF DE GÉNÉRATION D'HYDROGÈNE, PROCÉDÉ DE FONCTIONNEMENT ET SYSTÈME DE PILE À COMBUSTIBLE

(30) Priority: 05.04.2012 JP 2012086130
(43) Date of publication of application: 11.02.2015
(73) Proprietor: Panasonic Intellectual Property Management Co., Ltd., Osaka-shi, Osaka 540-6207 (JP)
(72) Inventor: YASUDA, Shigeki, Osaka 540-6207 (JP); TATSUI, Hiroshi, Osaka 540-6207 (JP); TAKEUCHI, Tomoya, Osaka 540-6207 (JP); UKAI, Kunihiro, Osaka 540-6207 (JP)
(74) Representative: Grünecker Patent- und Rechtsanwälte PartG mbB
(86) International application number: PCT/JP2013/001613
(87) International publication number: WO 2013/150721

(56) References cited:
- WO-A1-2011/077753
- JP-A- 2003 277 011
- JP-A- 2005 206 413
- JP-A- 2008 105 861
- JP-A- 2008 137 866
- US-A1- 2002 150 800
- US-A1- 2012 040 256

## Description

### Technical Field

The present invention relates to a hydrogen generator, an operation method thereof, and a fuel cell system. Particularly, the present invention relates to a hydrogen generator which generates a hydrogen-containing gas through a reforming reaction between a hydrocarbon based raw material gas and water, a fuel cell system including the hydrogen generator and a fuel cell which generates electric power by using the hydrogen-containing gas, and an operation method thereof

### Background Art

Conventionally, there is known a fuel cell system including a hydrogen generator for generating hydrogen required to generate electric power in a fuel cell. For example, in a fuel cell system disclosed in Patent Literature 1, a steam reformer generates a hydrogen-rich reformed gas by reforming a fuel by using a steam in a state in which the supply amount of the steam is adjusted so that a steam carbon ratio (S/C ratio) becomes about 2.5 to 3.5. A CO shift converter reduces a concentration of carbon monoxide by converting carbon monoxide contained in the reformed gas by using the steam. A CO removing unit removes carbon monoxide by selectively oxidizing (oxidating) carbon monoxide contained in the reformed gas by using air. A fuel cell body generates the electric power by using the reformed gas treated in the CO shift converter and the CO removing unit, and the air. A burner combusts an unreacted gas (fuel) discharged from the fuel cell by using air, to heat the steam reformer.

### Citation List

### Patent Literature

Patent Literature 1: Japanese Laid-Open Patent Application Publication No. 2000-251914

### Summary of Invention

### Technical Problem

However, in the conventional fuel cell system, since a change in the composition of the fuel, which results in a change in calories is not considered, the efficiency and durability of the hydrogen generator and of fuel cell system will be degraded according to the change in the composition of the fuel.

Specifically, the fuel is mainly composed of a hydrocarbon gas. The component of the hydrocarbon gas changes, or a gas which is other than hydrocarbon gas, such as nitrogen, is mixed into the fuel, which causes the change in the composition of combustion. For example, if the component of the hydrocarbon gas of the fuel changes, and the number of moles (mole number) of carbon atoms contained in combustion of 1 mole is increased, the S/C ratio becomes lower than a target value (2.5 to 3.5). The steam used in a shift reaction in the CO shift converter is reduced, and the amount of carbon monoxide which can be reduced through the shift reaction is reduced. Also, when the component of the hydrocarbon gas of the fuel changes, and the number of moles of carbon atoms contained in the fuel of 1 mole is increased, carbon monoxide remains in the reformed gas, if the amount of air in the CO removing unit is not increased in response to an increase in the concentration of carbon monoxide in the reformed gas supplied to the CO removing unit. If the reformed gas containing hydrocarbon is supplied to the fuel cell, the durability and efficiency of the fuel cell system are degraded.

The present invention is directed to solving the above described problem, and an object of the present invention is to provide a hydrogen generator which is capable of reducing carbon monoxide in a hydrogen-containing gas even when the composition of a raw material gas changes, an operation method thereof, and a fuel cell system.

### Solution to Problem

According to the present invention, a hydrogen generator is defined in claim 1. A method according to the invention is defined in claim 8. Further advantageous embodiments are defined in the dependent claims.

### Advantageous Effects of Invention

The present invention has the above described configuration, and has an advantage that it is possible to provide a hydrogen generator which is capable of reducing carbon monoxide in a hydrogen-containing gas even when the composition of a raw material gas changes, an operation method thereof, and a fuel cell system.

The above and further objects, features, and advantages of the invention will more fully be apparent from the following detailed description with accompanying drawings.

### Brief Description of Drawings

Fig. 1 is a block diagram showing the configuration of a hydrogen generator according to Embodiment 1 of the present invention.
Fig. 2 is a flowchart showing the exemplary operation method of the hydrogen generator of Fig. 1.
Fig. 3 is a block diagram showing the configuration of a fuel cell system according to Embodiment 2 of the present invention.

### Description of Embodiments

Hereinafter, embodiments of the present invention will be described specifically with respect to the drawings.

Throughout the drawings, the same or corresponding components are designated by the same reference symbols and will not be described repeatedly.

### (Embodiment 1)

### (Configuration of hydrogen generator)

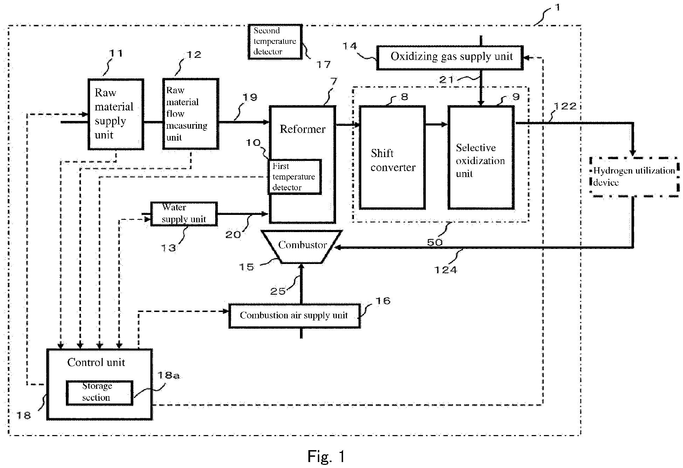

Fig. 1 is a block diagram showing the configuration of a hydrogen generator 1. The hydrogen generator 1 is a device for generating a hydrogen-containing gas. As shown in Fig. 1, the hydrogen generator 1 includes a reformer 7. The reformer 7 contains a reforming catalyst (not shown). The reformer 7 is a reaction unit which causes a reforming reaction of a raw material gas with water (hereinafter will be referred to as "reforming water") by the action of the reforming catalyst, to generate the hydrogen-containing gas. The reformer 7 is provided with a first temperature detector 10 which detects the temperature of the reformer 7. As the temperature of the reformer 7, for example, the temperature of the reforming catalyst, the temperature of the raw material gas supplied to the reformer 7, or the temperature of the hydrogen-containing gas generated in the reformer 7 is detected. This temperature (hereinafter will be referred to as "first detection temperature") is output to a control unit 18. The reformer 7 is connected to a raw material supply unit 11 via a raw material gas supply passage 19 and to a water supply unit 13 via a water supply passage 20.

The raw material supply unit 11 is a device for supplying the raw material gas to the reformer 7 via the raw material gas supply passage 19 and serves to adjust the supply amount of the raw material gas. The raw material supply unit 11 includes, for example, a booster or a flow control valve, which is connected to a tank filled with the raw material gas or infrastructure for supplying the raw material gas. The raw material gas contains as a major component an organic compound including hydrocarbon: CₙHₘ composed of at least carbon and hydrogen. A raw material flow measuring unit 12 is connected to the raw material gas supply passage 19. Note that a desulfurization unit for reducing a sulfur component in the raw material gas may be connected to the raw material gas supply passage 19.

The raw material flow measuring unit 12 measures the volume flow (volume flow rate) of the raw material gas supplied from the raw material supply unit 11 to the reformer 7, and outputs this flow (hereinafter will be referred to as measurement flow) to the control unit 18.

The water supply unit 13 is a device for supplying the reforming water in a liquid or gaseous (steam) state to the reformer 7 via the water supply passage 20, and serves to adjust the supply amount of the reforming water. The water supply unit 13 includes, for example, a plunger pump which is connected to a water source such as tap water and is capable of discharging the water at a constant amount.

The upstream end of a hydrogen-containing gas supply passage 122 is connected to the reformer 7, while the downstream end thereof is connected to a hydrogen utilization device such as a fuel cell. The hydrogen-containing gas generated in the reformer 7 contains carbon monoxide. For this reason, a removing unit 50 such as a shift converter 8 and a selective oxidization unit 9 is connected to the hydrogen-containing gas supply passage 122. A reactant gas supply unit such as an oxidizing gas supply unit 14 is connected to the removing unit 50 to remove carbon monoxide from the hydrogen-containing gas by reacting carbon monoxide with the reactant gas. In a case where it is not necessary to remove carbon monoxide from the hydrogen-containing gas, the removing unit 50 may be omitted.

The shift converter 8 is connected to the reformer 7 via the hydrogen-containing gas supply passage 122. The hydrogen-containing gas and the steam which has not been consumed in the reforming reaction are supplied from the reformer 7 to the shift converter 8 via the hydrogen-containing gas supply passage 122. The shift converter 8 is a removing unit which converts carbon monoxide gas in the hydrogen-containing gas with the steam through a shift reaction into a hydrogen gas and a carbon dioxide gas, thereby removing carbon monoxide. Although the water supply unit 13 and the water supply passage 20 are used to supply the water to the reformer 7 and to the shift converter 8, a water supply unit and a water supply passage corresponding to the shift converter 8 may be provided separately from the water supply unit 13 and the water supply passage 20 corresponding to the reformer 7. For example, a branch passage of the water supply passage 20 may be provided, and the steam may be supplied from the water supply unit 13 to the shift converter 8 via this branch passage. Or, a water supply unit which is different from the water supply unit 13 may be provided to supply the steam to the shift converter 8.

The selective oxidization unit 9 is connected to the shift converter 8 via the hydrogen-containing gas supply passage 122 and supplied with the hydrogen-containing gas from the shift converter 8 via the hydrogen-containing gas supply passage 122. The selective oxidization unit 9 is also connected to the oxidizing gas supply unit 14 via an oxidizing gas supply passage 21, and supplied with the oxidizing gas as the reactant gas from the oxidizing gas supply unit 14 via the oxidizing gas supply passage 21. The selective oxidization unit 9 is a removing unit which converts carbon monoxide remaining in the hydrogen-containing gas into carbon dioxide through a selective oxidization reaction by using the oxidizing gas, to remove carbon monoxide. The oxidizing gas supply unit 14 is a supply device of the oxidizing gas, which is capable of controlling the supply amount of the oxidizing gas. In a case where air is used as the oxidizing gas, for example, a blower having a suction port which opens to atmosphere, or a fan such as a sirocco fan, which is capable of adjusting the supply amount of the oxidizing gas, is used as the oxidizing gas supply unit 14.

The combustor 15 is connected to the hydrogen utilization device via an exhaust gas passage 124, and supplied with an exhaust gas via the exhaust gas passage 124. The exhaust gas contains as combustible gases the hydrogen-containing gas remaining unconsumed in the hydrogen utilization device and the raw material gas remaining unconsumed in the reforming reaction in the reformer 7. A combustion air supply unit 16 is connected to the combustor 15 via a combustion air supply passage 25. Air used for combustion (hereinafter will be referred to as "combustion air") is supplied from the combustion air supply unit 16 to the combustor 15 via the combustion air supply passage 25. As the combustion air supply unit 16, a blower having a suction port which opens to atmosphere, or a fan such as a sirocco fan, which is capable of adjusting the supply amount of the combustion air, is used. The combustor 15 combusts the combustible gas with the combustion air to generate combustion heat to heat the reformer 7 present in the vicinity thereof. In addition to the exhaust gas passage 124, the raw material supply unit 11 and other combustible gas supply unit may be connected to the combustor 15.

The second temperature detector 17 is provided in the casing (not shown) of the hydrogen generator 1 or in the vicinity of the casing. The second temperature detector 17 detects the ambient temperature of the hydrogen generator 1, and outputs this temperature (hereinafter will be referred to as "second detection temperature") to the control unit 18. The second temperature detector 17 may indirectly detect the ambient temperature of the hydrogen generator 1 instead of directly detecting it. In this case, the second temperature detector 17 is provided at a location at which the second temperature detector 17 can detect a temperature which correlates with the ambient temperature of the hydrogen generator 1. The second temperature detector 17 detects the ambient temperature of the hydrogen generator 1 as the second detection temperature from the detection temperature, based on the correlation.

The control unit 18 is connected to the components of the hydrogen generator 1 via signal wires and controls the components by transmitting/receiving signals to/from the components. For example, the control unit 18 controls the supply amount from the raw material supply unit 11, the supply amount from the water supply unit 13, the supply amount from the oxidizing gas supply unit 14, and the supply amount from the combustion air supply unit 16, based on the measurement value from the first temperature detector 10, the measurement value from the raw material flow measuring unit 12 and the measurement value from the second temperature detector 17. The control unit 18 may be constituted by a microcontroller, and may include MPU, PLC (programmable logic controller), a logic circuit, etc.. The control unit 18 includes a storage section 18a which contains the average composition of a saturated hydrocarbon gas contained in the raw material gas, the number of moles of carbon atoms contained in the raw material gas of the average composition of 1 mole, etc.. The storage section 18a may not be incorporated into the control unit 18 so long as the control unit 18 can access the storage section 18a.

### (Operation of hydrogen generator)

The operation of the hydrogen generator 1 configured as described above is performed primarily under control of the control unit 18. Although a case where the raw material gas is mainly composed of the saturated hydrocarbon gas: CₙH₂ₙ₊₂, will be hereinafter described, the same operation occurs if other hydrocarbon gas is used.

The raw material supply unit 11 supplies the raw material gas to the combustor 15 via the reformer 7. The combustion air supply unit 16 supplies the combustion air to the combustor 15. The combustor 15 combusts therein the raw material gas with the combustion air, and the resulting combustion heat heats the reformer 7. In this way, the reformer 7 is placed in a high-temperature state, and, the raw material gas and the reforming water are supplied to the reformer 7 in the high-temperature state.

The reformer 7 generates the hydrogen-containing gas from the raw material gas and the reforming water through the reforming reaction which is represented primarily by CₙH₂ₙ₊₂ + 2nH₂O → (3n + 1)H₂ + nCO₂, and CₙH₂ₙ₊₂ + nH₂O → (2n + 1)H₂ + nCO. The ratio of the raw material gas which is subjected to the reforming reaction mainly depends on the temperature of the reformer 7. In the present embodiment, to generate the hydrogen-containing gas with a predetermined amount, the temperature of the reformer 7 is set to, for example, 700 degrees C so that the ratio of the raw material gas which is subjected to the reforming reaction becomes 85 to 95%.

The hydrogen-containing gas generated in the reformer 7 contains carbon monoxide of, for example, about 10%. To remove carbon monoxide from the hydrogen-containing gas, the hydrogen-containing gas is supplied to the shift converter 8. At this time, the steam remaining unconsumed in the reforming reaction in the reformer 7 is also supplied to the shift converter 8. The shift converter 8 removes carbon monoxide from the hydrogen-containing gas through the shift reaction which is primarily represented by CO + H₂O →H₂ + CO₂.

Still, the hydrogen-containing gas contains a little amount of carbon monoxide, and therefore is supplied to the selective oxidization unit 9. The selective oxidization unit 9 is also supplied with the oxidizing gas from the oxidizing gas supply unit 14. The selective oxidization unit 9 reduces the concentration of carbon monoxide in the hydrogen-containing gas to 10ppm or lower through the oxidization reaction which is represented primarily by CO + (1/2)O₂ → CO₂.

The hydrogen-containing gas from which carbon monoxide has been removed is supplied to the hydrogen utilization device such as a fuel cell, and the remaining exhaust gas is supplied to the combustor 15. This exhaust gas contains as combustible gases the hydrogen-containing gas remaining unconsumed in the hydrogen utilization device and the raw material gas remaining unconsumed in the reforming reaction. The combustor 15 is also supplied with the combustion air from the combustion air supply unit 16, and a combustion reaction which is represented primarily by H₂ + (1/2)O₂ → H₂O and CₙH₂ₙ₊₂ + {(3n + 1)/2}O₂ → nCO₂ + (n + 1)H₂O occurs therein. The resulting combustion heat allows the reformer 7 to be maintained at a predetermined temperature. Since the temperature of the reformer 7 depends on the amount of the combustible gas, i.e., the volume flow of the raw material gas supplied from the raw material supply unit 11, the volume flow of the raw material gas supplied from the raw material supply unit 11 is feedback-controlled so that the temperature of the reformer 7 becomes the predetermined temperature.

As described above, the reforming water reacts with the raw material gas, the oxidizing gas reacts with carbon monoxide which is a product derived from the raw material gas, and the combustion air reacts with the raw material gas and hydrogen which is a product derived from the raw material gas. Because of this, the supply amount of the reforming water, the supply amount of the oxidizing gas, and the supply amount of the combustion air depend on the supply amount and composition of the raw material gas. The supply amount of the raw material gas is found from the volume flow measured by raw material flow measuring unit 12. The ratio of the hydrocarbon gas in the raw material gas and the number of carbons of the hydrocarbon gas: n indicating the composition of the raw material gas are pre-set in the storage section 18a as described above. However, the composition of the raw material gas may change, if the ratio of the hydrocarbon gas in the raw material gas or the component of the hydrocarbon gas changes. In light of this, as will be described later, a change in the composition of the raw material gas is detected, and each supply amount is controlled in an operation mode corresponding to the changed composition. As the operation mode, there are a normal mode in a case where the composition of the raw material gas does not change, and a reduction mode and an increase mode in a case where there is a change in the composition of the raw material gas. In the normal mode, preset values are used as the ratio of the hydrocarbon gas in the raw material gas and the number of carbons of the raw material gas: n.

### (Control of water supply unit in normal mode)

As described above, during the operation of the hydrogen generator 1, the reforming water supplied from the water supply unit 13 is used in the reaction in the reformer 7 and in the reaction in the shift converter 8. Hereinafter, how to control the supply amount of the reforming water will be described.

The supply amount (volume flow) of the reforming water supplied from the water supply unit 13 is controlled by the control unit 18 such that a first ratio: S/C which is a mole ratio between the reforming water supplied to the reformer 7 and carbons in the raw material gas supplied to the reformer 7 reaches (becomes) a target value. If a pressure and a temperature are constant, then the mole ratio is equal to a volume ratio. Therefore, the first ratio can be expressed as Vw/(n · Vf) by using the volume flow of the reforming water: Vw and the volume flow of the raw material gas: Vf. The volume flow of the raw material gas: Vf is measured by the raw material flow measuring unit 12. The ratio of the hydrocarbon gas in the raw material gas and the number of carbons of the hydrocarbon gas: n are preset in the storage section 18a. The target value is preset to, for example, 3.0 in the normal mode, based on the amount of water used in the reforming reaction in the reformer 7, or in the shift reaction in the shift converter 8, the characteristics of the hydrogen generator 1, and the specification required in the hydrogen utilization device.

The volume flow of the reforming water: Vw is found so that the first ratio reaches the target value, i.e., Vw/(n · Vf) = 3.0 is satisfied. The water supply unit 13 is controlled so that the reforming water is supplied with this volume flow. For example, in a case where methane is used as the raw material gas, the number of carbons: n is 1 and therefore, the reforming water of 3 mole with respect to methane of 1 mole is supplied. Or, in a case where propane is used as the raw material gas, the number of carbons: n is 3 and therefore, the reforming water of 9 mole with respect to propane of 1 mole is supplied.

As described above, the reforming water is supplied to the reformer 7 so that the first ratio reaches the target value. Thus, it becomes possible to prevent a situation which occurs when the first ratio continues to be smaller than the target value, i.e., a situation in which excess raw material gas is thermally decomposed due to deficiency of the steam, carbon component is deposited and adheres to the reforming catalyst, and as a result, the durability of the hydrogen generator 1 is reduced. In addition, it becomes possible to prevent a situation which occurs when the first ratio continues to be larger than the target value, i.e., a situation in which the amount of heat required to convert the reforming water into the steam increases, and the efficiency of the hydrogen generator 1 is degraded. Furthermore, it becomes possible to prevent a situation in which the reforming catalyst gets wet and degraded due to excess steam remaining unconsumed in the reforming reaction, and as a result, the durability of the hydrogen generator 1 is degraded.

### (Control of combustion air supply unit in normal mode)

As described above, during the operation of the hydrogen generator 1, the combustion air is supplied from the combustion air supply unit 16 to the combustor 15. Hereinafter, how to control the supply amount of the combustion air will be described.

The amount (volume flow) of the combustion air supplied from the combustion air supply unit 16 is controlled by the control unit 18 such that a second ratio (air ratio): A/Ao reaches a target value. The second ratio refers to a ratio between the supply amount of the combustion air: A which is actually supplied to the combustor 15 and air amount (theoretical air amount): Ao which is minimum required to completely combust the combustible gas. The target value of the second ratio is preset to, for example, 1.5 in the normal mode.

The combustion reaction proceeding in the combustor 15 is represented primarily by H₂ + (1/2)O₂ → H₂O and CₙH₂ₙ₊₂ + {(3n + 1)/2}O₂ → nCO₂ + (n + 1)H₂O. Therefore, the theoretical air amount: Ao depends on the amount of the combustible gas and the number of carbons of the raw material gas: n. The number of carbons of the raw material gas: n is preset in the storage section 18a as described above. The amount of the combustible gas is a sum of the amount of hydrogen supplied to the combustor 15 and the amount of the hydrocarbon gas in the raw material gas remaining unconsumed in the reformer 7. This amount of hydrogen is an amount obtained by subtracting the amount of hydrogen consumed in the hydrogen utilization device from the amount of hydrogen generated in the reformer 7.

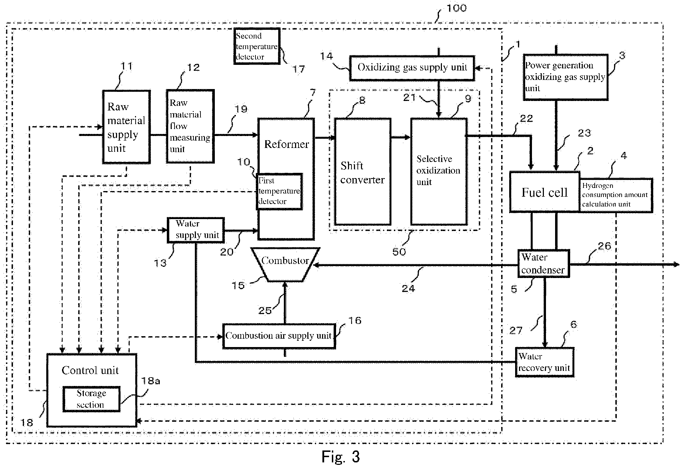

The reforming reaction proceeding in the reformer 7 is represented primarily by CₙH₂ₙ₊₂ + 2nH₂O →(3n + 1)H₂ + nCO₂, and CₙH₂ₙ₊₂ + nH₂O →(2n + 1)H₂ + nCO. Therefore, the generation amount of hydrogen is derived from the supply amount of the raw material gas, the ratio of the hydrocarbon gas in the raw material gas, the number of carbons of the raw material gas: n, and the ratio of the raw material gas which is subj ected to the reforming reaction. The amount of the raw material gas remaining unconsumed in the reformer 7 is derived from the supply amount of the raw material gas and the ratio of the raw material gas which is subjected to the reforming reaction. The supply amount of the raw material gas is the flow of the raw material gas which is measured by the raw material flow measuring unit 12. The ratio of the hydrocarbon gas in the raw material gas and the number of carbons in the raw material gas : n are preset. The ratio of the raw material gas which is subj ected to the reforming reaction in the reformer 7 is controlled to reach, for example, 85 to 95%. Therefore, the amount of hydrogen generated in the reformer 7 and the amount of the raw material gas remaining unconsumed in the reformer 7 are derived from the measurement flow of the raw material gas. The amount of hydrogen consumed in the hydrogen utilization device is derived from the consumption amount of hydrogen which is calculated by a hydrogen consumption amount calculation unit 4 (Fig. 3) in a fuel cell system 100 as will be described later. From this, the amount of the combustible gas in the combustor is derived from on the measurement flow of the raw material gas, the consumption amount of hydrogen, etc..

The theoretical air amount: Ao correlates with the measurement flow of the raw material gas and the consumption amount of hydrogen. This correlation is stored in the storage section 18a. Therefore, the control unit 18 obtains the measurement flow of the raw material gas and the consumption amount of hydrogen, and finds the theoretical air amount: Ao based on the obtained values and the above correlation. The control unit 18 calculates the supply amount of the combustion air: A so that the second ratio reaches the target value, i.e., A/Ao = 1.5 is satisfied, and controls the combustion air supply unit 16 so that the combustion air is supplied with this supply amount.

In the above described manner, the combustion air is supplied to the combustor 15 so that the second ratio reaches the target value. Therefore, the combustor 15 can completely combust the combustible gas so that the resulting combustion heat heats the reformer 7 stably to a predetermined temperature.

### (Control of oxidizing gas supply unit in normal mode)

As described above, during the operation of the hydrogen generator 1, the oxidizing gas is supplied from the oxidizing gas supply unit 14 to the selective oxidization unit 9. Hereinafter, how to control the supply amount of the oxidizing gas will be described.

The oxidization reaction proceeding in the selective oxidization unit 9 is represented primarily by CO + (1/2)O₂ → CO₂. Therefore, the amount (volume flow) of the oxidizing gas supplied from the oxidizing gas supply unit 14 is decided based on the amount of carbon monoxide in the hydrogen-containing gas. The control unit 18 controls the oxidizing gas supply unit 14 so that the oxidizing gas is supplied with the decided amount. Carbon monoxide is generated through the reaction in the reformer 7, which is represented primarily by CₙH₂ₙ₊₂ + nH₂O → (2n + 2)H₂ + nCO. Because of this, the volume flow of carbon monoxide depends on the volume flow of the raw material gas: Vf, and the ratio of the hydrocarbon gas in the raw material gas and the number of carbons of the raw material gas: n. The ratio of the hydrocarbon gas in the raw material gas and the number of carbons of the raw material gas: n are preset. Therefore, the target value of the amount (volume flow) of the oxidizing gas supplied from the oxidizing gas supply unit 14 correlates with the volume flow of the raw material gas. This correlation is stored in the storage section 18a.

Therefore, based on this correlation, the control unit 18 derives the target value of the supply amount of the oxidizing gas from the flow of the raw material gas measured by the raw material flow measuring unit 12, and the number of carbons. The control unit 18 controls the oxidizing gas supply unit 14 so that the amount of the oxidizing gas supplied from the oxidizing gas supply unit 14 reaches the target value.

This makes it possible to supply the oxidizing gas required to oxidize carbon monoxide to the selective oxidization unit 9. Therefore, the concentration of carbon monoxide in the hydrogen-containing gas can be reduced.

### (Control of each supply unit in reduction mode and in increase mode)

As described above, when the composition of the raw material gas changes, the operation mode is shifted from the normal mode to the reduction mode or to the increase mode so that the supply amount of the reforming water, the supply amount of the oxidizing gas and the supply amount of the combustion air reach (become) the amounts corresponding to the changed composition of the raw material gas. According to this operation mode, the water supply unit 13, the oxidizing gas supply unit 14, and the combustion air supply unit 16 are controlled.

Specifically, the composition of the raw material gas is decided by the component of the raw material gas and the ratio of its amount. The hydrocarbon gas which is a major component of the basic raw material gas: CₙHₘ, the number of carbons of the hydrocarbon gas: n, and the ratio of the hydrocarbon gas in the raw material gas are preset in the storage section 18a. If the ratio of the hydrocarbon gas in the raw material gas and the component of the hydrocarbon gas change, and thereby the composition of the raw material gas changes, the calories of the raw material gas per unit volume changes according to the change in the composition. For example, in general, in a case where the raw material gas contains as major component a chain saturated hydrocarbon gas, such as methane, ethane, or propane, the calories of the raw material gas per unit volume is reduced if the number of carbons: n is reduced. If a gas which does not cause an exothermic reaction in the combustor 15, or is lower in calories than hydrocarbon is mixed into the raw material gas, and the ratio of the hydrocarbon gas in the raw material gas is reduced, the calories of the raw material gas per unit volume is reduced.

When the calories of the raw material gas per unit volume are changed, the calories of the combustible gas in the combustor 15 are reduced, and "the amount of heat supplied from the combustor 15 to the reformer 7" is also reduced, if the supply amount of the raw material gas is equal to that before the change in the composition. The temperature of the reformer 7 is decided based on "the amount of heat supplied from the combustor 15 to the reformer 7," "the amount of heat used in the reforming reaction in the reformer 7", "the amount of heat emitted from the reformer 7 to the shift converter 8 at a downstream side," and "the amount of heat emitted from the reformer 7 to outside". Therefore, if "the amount of heat supplied from the combustor 15 to the reformer 7" is reduced, then the first detection temperature which is the temperature of the reformer 7 is reduced.

To avoid this, the supply amount of the raw material gas is feedback-controlled so that the first detection temperature reaches the predetermined temperature. To keep the first detection temperature at the predetermined temperature and compensate the reduction of "the amount of heat supplied from the combustor 15 to the reformer 7," the supply amount of the raw material gas is increased. The control unit 18 detects the change in the composition of the raw material gas, which results in the change in the calories of the raw material gas, based on the flow of the raw material gas measured by the raw material flow measuring unit 12.

If the ambient temperature of the hydrogen generator 1 changes, "the amount of heat emitted from to the reformer 7 to outside" changes, and the supply amount of the raw material gas which is required to maintain the temperature of the reformer 7 changes. To eliminate effects caused by the change in the ambient temperature of the hydrogen generator 1, the control unit 18 sets a reference flow used to determine whether or not the composition of the raw material gas changed, based on the ambient temperature of the hydrogen generator 1, i.e., the second detection temperature from the second temperature detector 17. The reference flow of the raw material gas is a volume flow of the raw material gas which is required for the first detection temperature as the temperature of the reformer 7 to reach the predetermined temperature when the ambient temperature of the hydrogen generator 1 is the second detection temperature in a state in which the change in the composition of the raw material gas, which results in the change in the calories of the raw material gas, has not occurred. In this way, the control unit 18 detects that the composition of the raw material gas has changed from the fact that the measurement flow of the raw material gas does not coincide with the reference flow based on the second detection temperature. This reference flow can be set as a flow in a predetermined range defined by an upper limit value and a lower limit value. As can be seen from the definition of the reference flow, the reference flow increases in value as the second detection temperature is lower.

If the measurement flow of the raw material gas coincides with the reference flow, the control unit 18 determines that the change in the composition of the raw material gas has not occurred, and sets the operation mode to the normal mode. As described above, in the normal mode, the water supply unit 13, the oxidizing gas supply unit 14, and the combustion air supply unit 16 are controlled so that the supply amounts thereof become the supply amounts corresponding to the composition of the raw material gas (the ratio of the hydrocarbon gas in the raw material gas and the number of carbons of the raw material gas) preset in the storage section 18a. If the measurement flow of the raw material gas is greater than the reference flow, the control unit 18 determines that the change in the composition of the raw material gas, which results in the reduction of the calories of the raw material gas, has occurred. The control unit 18 estimates the composition of the raw material gas based on a difference between the measurement flow and the reference flow, and sets the operation mode to the reduction mode. On the other hand, if the measurement flow of the raw material gas is less than the reference flow, the control unit 18 determines that the change in the composition of the raw material gas, which results in an increase in the calories of the raw material gas. The control unit 18 estimates the composition of the raw material gas based on a difference between the measurement flow and the reference flow, and sets the operation mode to the increase mode. In the reduction mode or the increase mode, the control unit 18 controls the water supply unit 13, the oxidizing gas supply unit 14, and the combustion air supply unit 16 so that the supply amounts thereof become the supply amounts corresponding to the estimated composition.

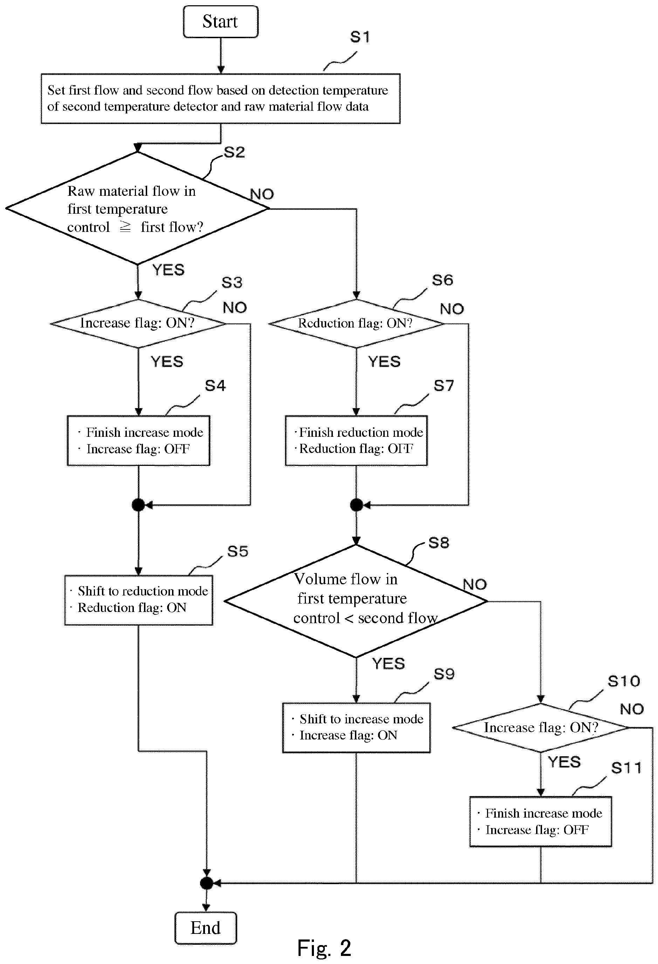

Fig. 2 is a flowchart showing the exemplary operation method of the hydrogen generator 1. As shown in Fig. 2, the control unit 18 obtains the second detection temperature from the second temperature detector 17 and sets a first flow and a second flow from the second detection temperature based on the raw material flow data (step S1). This raw material flow data is data in which the second detection temperature, the first flow, and the second flow are associated with each other and stored in the storage section 18a. The first flow and the second flow are flow values included in the reference flow, and are, for example, the upper limit value and the lower limit value of the reference flow. If the ambient temperature of the hydrogen generator 1 is low, the supply amount of the raw material gas, which is required to keep the temperature of the reformer 7 at the predetermined temperature is increased. In light of this, the raw material flow data is set such that the first flow and the second flow are greater as the second detection temperature is lower. Alternatively, the first flow and the second flow may not be the upper limit value and the lower limit value of the reference flow, but may be a value obtained by adding a specified flow to the reference flow and a value obtained by subtracting the specified flow from the reference flow.

Then, the control unit 18 obtains the measurement flow of the raw material gas from the raw material flow measuring unit 12, and determines whether or not this measurement flow is equal to or greater than the first flow (step S2). When the control unit 18 determines that the measurement flow is equal to or greater than the first flow (step S2: YES), the first detection temperature is lower than the predetermined temperature due to the change in the composition of the raw material gas, which results in the reduction of the calories of the raw material gas, and the supply amount of the raw material gas has been increased to compensate this. Therefore, the control unit 18 performs control in the "reduction mode" which is a control method corresponding to the change in the composition of the raw material gas, which results in the reduction of the calories of the raw material gas.

Initially, the control unit 18 determines whether or not an increase flag in the storage section 18a is ON (S3). When the control unit 18 determines that the increase flag is ON (step S3: YES), the set operation mode is the "increase mode" which is a control method corresponding to the change in the composition of the raw material gas, which results in the increase in the calories of the raw material gas. Therefore, the control unit 18 finishes the increase mode, and turns OFF the increase flag (step S4).

On the other hand, when the control unit 18 determines that the increase flag is not ON (step S3: NO), and turns OFF the increase flag (step S4), the set operation mode is not the increase mode. Therefore, the control unit 18 sets the operation mode to the reduction mode, and turns ON the reduction flag in the storage section 18a (step S5). In brief, when the measurement flow of the raw material gas is equal to or greater than the first flow, the control unit 18 sets the operation mode to the reduction mode and turns ON the reduction flag.

Thereby, the control unit 18 controls the supply amount of the water supply unit 13, the supply amount of the oxidizing gas supply unit 14, and the supply amount of the combustion air supply unit 16, in the reduction mode. In a state in which the calories of the raw material gas are reduced, the change in the composition of the raw material gas, which reduces the ratio of the hydrocarbon gas in the raw material gas or the number of carbons of the hydrocarbon gas, has occurred. Therefore, the control unit 18 estimates the composition of the raw material gas based on a difference between the measurement flow of the raw material gas and the first flow, and changes the target values of the first ratio, second ratio and oxidizing gas amount into smaller values corresponding to the estimated composition of the raw material gas. When the control unit 18 controls the supply units 13, 14, 16 as in the control in the normal mode, the supply amount of the reforming water, the supply amount of the combustion air, and the supply amount of the oxidizing gas become the amounts corresponding to the composition of the raw material gas. This makes it possible to prevent problems associated with excess supply amounts.

On the other hand, when the control unit 18 determines that the measurement flow of the raw material gas is less than the first flow in step S2 (step S2: NO), the supply amount of the raw material gas has not been increased even though the change in the composition of the raw material gas, which results in the reduction of the calories of the raw material gas, has occurred, and the control mode is not the reduction mode. Therefore, the control unit 18 determines whether or not the reduction flag in the storage section 18a is ON (S6). When the control unit 18 determines that the reduction flag is ON (step S6: YES), the control unit 18 finishes the reduction mode, and turns OFF the reduction flag (step S7).

When the control unit 18 determines that the reduction flag is not ON (step S6: NO), and the control unit 18 turns OFF the reduction flag (step S7), the set operation mode is not the reduction mode. To find out whether the present case is a case where the change in the composition of the raw material gas, which results in the change in the calories of the raw material gas, has not occurred, or a case where the change in the composition of the raw material gas, which results in the increase in the calories of the raw material gas, has occurred, the control unit 18 determines whether or not the measurement flow of the raw material gas is less than the second flow (step S8).

When the control unit 18 determines that the measurement flow of the raw material gas is less than the second flow (step S8: YES), the first detection temperature has become higher than the predetermined temperature due to the change in the composition of the raw material gas, which results in the increase in the calories of the raw material gas, and thereby the supply amount of the raw material gas has been reduced. Therefore, the control unit 18 sets the increase mode, and turns ON the increase flag in the storage section 18a (step S9). In brief, when the measurement flow of the raw material gas is less than the second flow, the control unit 18 sets the operation mode to the increase mode and turns ON the increase flag.

Thereby, the control unit 18 controls the supply amount of the water supply unit 13, the supply amount of the oxidizing gas supply unit 14, and the supply amount of the combustion air supply unit 16, in the increase mode. Specifically, the control unit 18 estimates the composition of the raw material gas based on a difference (result of comparison) between the measurement flow of the raw material gas and the second flow, and changes the target values of the first ratio, second ratio and oxidizing gas amount into larger values corresponding to the estimated composition of the raw material gas. When the control unit 18 controls the supply units 13, 14, 16 as in the control in the normal mode, the supply amount of the reforming water, the supply amount of the combustion air and the supply amount of the oxidizing gas become the amounts corresponding to the changed composition of the raw material gas. This makes it possible to prevent problems associated with insufficient supply amounts.

On the other hand, when the control unit 18 determines that the measurement flow of the raw material gas is not less than the second flow (step S8: NO), the change in the composition, which results in the change in the calories of the raw material gas, has not occurred. For this reason, the control method is the normal mode rather than the increase mode and the reduction mode. When the control unit 18 determines that the increase flag is ON (S10: YES), the control unit 18 finishes the increase mode, and turns OFF the increase flag (step S11). As described above, in brief, when the measurement flow of the raw material gas is less than the first flow and is equal to or greater than the second flow, the control unit 18 sets the operation mode to the normal mode and turns ON the normal flag. In this state, the control unit 18 controls the supply units 13, 14 and 16 in the normal mode, thereby allowing the reforming water, the combustion air, and the oxidizing gas to be supplied with the amounts corresponding to the composition of the raw material gas.

### (Embodiment 2)

Fig. 3 is a block diagram showing the configuration of a fuel cell system 100. As shown in Fig. 3, the fuel cell system 100 includes the hydrogen generator 1 for generating the hydrogen-containing gas, and a fuel cell 2 for generating electric power by using the hydrogen-containing gas and the oxidizing gas for power generation (power generation oxidizing gas).

The fuel cell 2 includes an anode (not shown) and a cathode (not shown). The hydrogen generator 1 is connected to the anode via a fuel gas supply passage 22, while a power generation oxidizing gas supply unit 3 is connected to the cathode via a power generation oxidizing gas supply passage 23. The fuel cell 2 generates electric power through a power generation reaction between hydrogen in the fuel gas and oxygen in the power generation oxidizing gas supplied to the cathode. The power generation results in heat and water. As a heat recovery section for recovering this heat, for example, a conventional means such as a hot water recovery means is used.

The hydrogen generator 1 supplies the hydrogen-containing gas as the fuel gas to the anode of the fuel cell 2 via the fuel gas supply passage 22. At this time, the fuel gas contains a certain amount of steam that has gone through the reforming reaction, but the steam may be added to the fuel gas. In a case where a fuel cell which may be poisoned by carbon monoxide is used as the fuel cell 2, for example, a polymer electrolyte fuel cell, the hydrogen generator 1 includes the shift converter 8 and the selective oxidization unit 9 as the removing unit. In a case where a fuel cell which is resistant to carbon monoxide is used as the fuel cell 2, for example, a solid oxide electrolyte fuel cell, the hydrogen generator 1 may not include the shift converter 8 and the selective oxidization unit 9. The control unit 18 need not be placed within the hydrogen generator 1. For example, the control unit 18 may be placed separately from the hydrogen generator 1. Or, in addition to the control unit 18 for controlling the operation of the hydrogen generator 1, a control unit for controlling the operation of the components which are other than the hydrogen generator 1 may be incorporated into the fuel cell system 100.

The power generation oxidizing gas supply unit 3 is a device which supplies the power generation oxidizing gas to the cathode of the fuel cell 2 via the power generation oxidizing gas supply passage 23 and is able to adjust the supply amount of the power generation oxidizing gas. For example, in a case where air is used as the power generation oxidizing gas, for example, a blower having a suction port which opens to atmosphere, or a fan such as a sirocco fan, is used, as the power generation oxidizing gas supply unit 3. A humidifier may be connected onto the power generation oxidizing gas supply passage 23. In this case, the power generation oxidizing gas is humidified with a certain amount of steam.

The hydrogen consumption amount calculation unit 4 includes a processor such as a microcontroller, and calculates the amount of hydrogen to be consumed (hereinafter will be referred to as "consumption amount of hydrogen") in the power generation reaction based on the electric power to be generated through the power generation reaction of the fuel cell 2, and outputs this consumption amount of hydrogen to the control unit 18.

A water condenser 5 is connected to the anode of the fuel cell 2 via an exhaust fuel gas passage 24 and to the cathode of the fuel cell 2 via an exhaust oxidizing gas passage 26. The exhaust fuel gas and the exhaust oxidizing gas are exhausted from the fuel cell 2 to the water condenser 5 via the exhaust fuel gas passage 24 and the exhaust oxidizing gas passage 26, respectively. The exhaust fuel gas and the exhaust oxidizing gas contain the steam. The water condenser 5 condenses water by cooling the exhaust fuel gas and the exhaust oxidizing gas. As the water condenser 5, for example, a heat exchanger is used. The water may be condensed from either one of the exhaust fuel gas and the exhaust oxidizing gas.

The water recovery unit 6 is connected to the water condenser 5 via a condensed water passage 27. The water recovery unit 6 recovers the water condensed in the water condenser 5 and supplied via the condensed water passage 27. The water recovery unit 6 may include a purifier or filter for removing a gas such as conductive ions from the water. The water recovery unit 6 is connected to the water supply unit 13 via a water supply passage 20 and supplies the water recovered as a water source to the water supply unit 13 via the water supply passage 20.

The combustor 15 is connected to the water condenser 5 via the exhaust fuel gas passage 24, and supplied with the exhaust fuel gas from which the water has been removed by the water condenser 5. The exhaust fuel gas includes the hydrogen gas remaining unconsumed in the power generation reaction in the fuel cell 2, and the raw material gas remaining unconsumed in the reforming reaction in the reformer 7, as the combustible gases. The combustor 15 combusts these combustible gases, and the resulting heat heats the reformer 7.

### (Operation of fuel cell system)

The hydrogen consumption amount calculation unit 4 calculates the consumption amount of hydrogen in the power generation reaction based on the electric power generated in the fuel cell 2, and outputs the consumption amount of hydrogen to the control unit 18. The control unit 18 decides the temperature of the reformer 7 such that the reformer 7 generates hydrogen with the set consumption amount or greater. At this time, if the amount of the hydrogen-containing gas generated in the reformer 7 is equal to the predetermined amount, the temperature of the reformer 7, i.e., the first detection temperature of the first temperature detector 10 is the predetermined temperature. The control unit 18 controls the raw material supply unit 11 such that the first detection temperature reaches the predetermined temperature.

The raw material supply unit 11 supplies the raw material gas to the reformer 7. The water supply unit 13 supplies the reforming water to the reformer 7. The reformer 7 in the predetermined temperature state generates the hydrogen-containing gas with a predetermined amount through the reforming reaction between the raw material gas and the reforming water. The hydrogen-containing gas is supplied to the shift converter 8. The shift converter 8 converts carbon monoxide by using the steam and reduces carbon monoxide. Then, the hydrogen-containing gas is supplied to the selective oxidization unit 9. The selective oxidization unit 9 oxidizes and removes carbon monoxide by using the oxidizing gas supplied from the oxidizing gas supply unit 14.

The hydrogen-containing gas from which carbon monoxide has been removed is supplied from the hydrogen generator 1 to the fuel cell 2, and the power generation oxidizing gas is supplied from the power generation oxidizing gas supply unit 3 to the fuel cell 2. The fuel cell 2 generates predetermined electric power through the power generation reaction between hydrogen in the hydrogen-containing gas and oxygen in the power generation oxidizing gas. This electric power is supplied to a power load (not shown).

Through the power generation reaction in the fuel cell 2, heat and water are generated. This heat is supplied to a heat load (not shown). This water is contained in the exhaust fuel gas and the exhaust oxidizing gas in the form of the steam and discharged from the fuel cell 2 to the water condenser 5 together with the exhaust fuel gas and the exhaust oxidizing gas. The water condenser 5 condenses the water and the water recovery unit 6 recovers the water. The water supply unit 13 supplies a part or all of this water to the reformer 7 as the reforming water.

The exhaust oxidizing gas discharged from the fuel cell 2 is discharged to outside the system. The exhaust fuel gas is supplied to the combustor 15, which combusts the combustible gas in the exhaust fuel gas with the combustion air. The resulting combustion heat heats the reformer 7.

### (Operation method of fuel cell system)

In a start-up step before the fuel cell 2 generates the predetermined electric power, when the generation amount of the hydrogen-containing gas continues to be equal to the predetermined amount for the first predetermined time or longer, the control unit 18 controls the supply amount of the reforming water, the supply amount of the combustion air and the supply amount of the oxidizing gas, based on the measurement flow of the raw material gas. The control unit 18 controls the supply amount of the water supply unit 13, the supply amount of the combustion air supply unit 16, and the supply amount of oxidizing gas supply unit 14, as in Embodiment 1. As used herein, the predetermined electric power refers to electric power generated in the fuel cell 2 by using the hydrogen-containing gas of a predetermined amount and the power generation oxidizing gas of an amount required for this power generation reaction.

When the generation amount of the hydrogen-containing gas continues to be equal to the predetermined amount for the first predetermined time or longer, the temperature of the reformer 7 and each supply amount are stable. Under this state, the measurement flow of the raw material gas changes based on a change in the ambient temperature of the hydrogen generator 1, and the change in the composition of the raw material gas, which results in the change in the calories. Therefore, by making a comparison between the measurement flow of the raw material gas, and the first flow and the second flow based on the second detection temperature, the control unit 18 can accurately detect the change in the composition of the raw material gas, which results in the change in the calories of the raw material gas, and precisely control the supply amount of the reforming water, the supply amount of the combustion air and the supply amount of the oxidizing gas, based on the change in the composition. Thus, when the start-up step shifts to the power generation step, the hydrogen-containing gas is stably supplied with the predetermined amount to the fuel cell 2. As a result, it becomes possible to prevent reduction of the power generation efficiency of the fuel cell 2 and the shut-down of the fuel cell 2.

### (Modified example 1)

In all of the above described embodiments, the control unit 18 controls the amount of the oxidizing gas supplied to the selective oxidization unit 9 of the removing unit 50, based on the flow of the raw material gas which is measured by the raw material flow measuring unit 12. Alternatively, instead of or in addition to the supply amount of the oxidizing gas, the control unit 18 may control the amount of the steam supplied to the shift converter 8, based on the measurement flow of the raw material gas. In this case, a steam supply unit is provided as a reactant gas supply unit, and supplies the steam to the shift converter 8 as the reactant gas. The steam supply unit may be the water supply unit 13 or may be separate from the water supply unit 13. In a case where the water supply unit 13 is used as the steam supply unit, a steam supply passage used to supply the steam to the shift converter 8 may be connected to the water supply unit 13, separately from the water supply passage 20 used to supply the reforming water to the reformer 7.

### (Modified example 2)

Although in all of the above descried embodiments, the first flow and the second flow based on the second detection temperature are used as the reference flow used to determine the change in the composition of the raw material gas, the present invention is not limited to this. In this case, when a change in the ambient temperature of the hydrogen generator 1 is less or the amount of heat emitted from the reformer 7 to outside is suppressed by heat insulation, the supply amount of the raw material gas which is required to maintain the temperature of the reformer 7 does not change or its change is small and may be ignored, even when the ambient temperature of the hydrogen generator 1 changes. In a case where the effects of the change in the second detection temperature on the supply amount of the raw material gas is less, for example, the supply amount of the raw material gas which is required to allow the first detection temperature to become the predetermined temperature is deemed as the reference flow.

### (Modified example 3)

Although in all of the above descried embodiments, the first flow and the second flow, based on the second detection temperature are used as the reference flow used to determine the change in the composition of the raw material gas, the reference flow based on the measurement flow of the raw material gas stored in the storage section 18a may be used, instead of or in addition to the first flow and the second flow. In this case, the control unit 18 may store in the storage section 18a the measurement flow of the raw material gas during the operation and set the reference flow based on the measurement flow of the raw material gas which is stored in the storage section 18a. In this case, the second temperature detector 17 for detecting the ambient temperature of the hydrogen generator 1 may be omitted.

For example, the control unit 18 stores in the storage section 18a the measurement flow of the raw material gas, in a state in which the supply amount of the raw material gas is controlled such that the first detection temperature reaches the predetermined temperature during the operation of the hydrogen generator 1. Then, the control unit 18 may read the measurement flow of the raw material gas in a previous operation from the storage section 18a, when the operation of the hydrogen generator 1 starts, and may use this as the reference flow. In this case, the first flow may be set to a flow which is a sum of the measurement flow of the raw material gas in the previous operation, and a predetermined flow, and the second flow may be set to a flow obtained by subtracting the predetermined flow from the measurement flow of the raw material gas in the previous operation.

Or, the control unit 18 may read from the storage section 18a the measurement flow of the raw material gas in the same time (time zone) as that of the operation of the hydrogen generator 1, and may use this as the reference flow. In this case, the first flow may be set to a flow which is a sum of the stored measurement flow in the same time, and a predetermined flow, and the second flow may be set to a flow obtained by subtracting the predetermined flow from the measurement flow in the same time.

Or, the control unit 18 may read the measurement flow in previous measurement from the storage section 18a, when the measurement flow of the raw material gas is measured by the raw material flow measuring unit 12, and may use this as the reference flow. In this case, the first flow may be set to a flow which is a sum of the measurement flow in the previous measurement, and a predetermined flow, and the second flow may be set to a flow obtained by subtracting the predetermined flow from the measurement flow in the previous measurement.

### (Modified example 4)

In all of the above described embodiments, the control unit 18 may compensate the predetermined temperature based on the operation time of the reformer 7. In this case, the amount of hydrogen-containing gas generated in the reformer 7 is reduced as degradation of the reforming catalyst or the like progresses over the operation time. To compensate the reduction of the generation amount, the control unit 18 stores in the storage section 18a the operation time of the reformer 7 and sets the predetermined temperature higher whenever the operation time passes the predetermined time. The first flow and the second flow are set based on the predetermined temperature. Therefore, the first flow and the second flow are compensated based on the operation time of the reformer 7.

Thereby, the temperature of the reformer 7 increases to address the degradation of the characteristics of the reformer 7, which is caused by an increase in the operation time of the reformer 7. This makes it possible to keep the amount of hydrogen-containing gas generated in the hydrogen generator 1 constant. Since the first flow and the second flow are compensated based on the operation time of the reformer 7, it becomes possible to accurately detect the change in the composition of the raw material gas, which results in the change in the calories of the raw material gas, and precisely control the supply amount of the reforming water, the supply amount of the combustion air, and the supply amount of the oxidizing gas, based on the change in the composition.

### (Modified example 5)

Although in all of the embodiments, all of the supply amount of the reforming water, the supply amount of the combustion air, and the supply amount of the oxidizing gas are controlled based on the change in the composition, in a case where the change in the composition of the raw material gas, which results in the change in the calories of the raw material gas occurs, at least one of the supply amount of the reforming water, the supply amount of the combustion air, and the supply amount of the oxidizing gas may be controlled.

### (Modified example 6)

In Embodiment 1, in a case where the generation amount of the hydrogen-containing gas continues to be equal to the predetermined amount for the first predetermined time or longer, the control unit 18 may control the supply amount of the reforming water, the supply amount of the combustion air, and the supply amount of the oxidizing gas. In this case, since the state in which the hydrogen-containing gas of the predetermined amount is generated continues for the first predetermined time, the temperature of each of the components and each supply amount are stable. Because of this, the measurement flow of the raw material gas changes based on a change in the ambient temperature of the hydrogen generator 1 and the change in the composition of the raw material gas, which results in the change in the calories of the raw material gas. Therefore, by making a comparison between the measurement flow of the raw material gas, and the first flow and the second flow based on the second detection temperature, it becomes possible to precisely control the supply amount of the reforming water, the supply amount of the combustion air and the supply amount of the oxidizing gas, based on the change in the measurement flow of the raw material gas.

### (Modified example 7)

In Embodiment 2, instead of or in addition to the start-up step, in the power generation step in which the fuel cell 2 is generating the predetermined power, the control unit 18 may control the supply amount of the reforming water, the supply amount of the combustion air, and the supply amount of the oxidizing gas, based on the measurement flow of the raw material gas. In this case, when a second predetermined time or longer passes, the control unit 18 may control the supply amount of the reforming water, the supply amount of the combustion air, and the supply amount of the oxidizing gas. Thereby, in the power generation step, even when the composition of the raw material gas changes, the reforming water and the like are supplied with amounts corresponding to the changed composition of the raw material gas. Therefore, carbon monoxide is removed, and the hydrogen-containing gas of an amount required for the power generation is supplied to the fuel cell 2. As a result, the power generation efficiency and durability of the fuel cell 2 can be maintained.

### (Modified example 8)

In Embodiment 2, when the measurement flow of the raw material gas becomes greater than the first flow or less than the second flow, the control unit 18 may set the power generation electric power to the predetermined electric power. Or, when the second predetermined time or longer passes, the control unit 18 may control the supply amount of the reforming water, and the like.

When the change in the composition of the raw material gas, which results in the change in the calories of the raw material gas occurs, the generation amount of the hydrogen-containing gas or the like may change. When the amount of the hydrogen-containing gas becomes the predetermined amount and the power generation electric power becomes the predetermined electric power, the temperature of the reformer 7 or the like and each supply amount are stabilized if this predetermined electric power continues for the second predetermined time or longer. Therefore, the measurement flow of the raw material gas changes based on the change in the ambient temperature of the hydrogen generator 1 and the change in the composition of the raw material gas, which results in the change in the calories of the raw material gas. Therefore, by making a comparison between the measurement flow of the raw material gas, and the first flow and the second flow based on the second detection temperature, the control unit 18 can accurately detect the change in the composition of the raw material gas, which results in the change in the calories of the raw material gas, and precisely control the supply amount of the reforming water, the supply amount of the combustion air and the supply amount of the oxidizing gas, based on the change in the composition.

### (Other modified example)

In all of the embodiments, when the change in the composition of the raw material gas, which results in the change in the calories of the raw material gas occurs, the target value of the first ratio, the target value of the second ratio, and target value of the oxidizing gas are changed based on the change in the composition to control the supply amount of the reforming water, the supply amount of the combustion air, and the supply amount of the oxidizing gas. The control method of these supply amounts is not limited to this. For example, when the first ratio is expressed as Vw/(n · Vf), the supply amount of the reforming water may be controlled by changing the number of carbons corresponding to the composition of the raw material gas : n and the volume flow of the raw material gas : Vf (ratio of the hydrocarbon gas in the raw material gas). Regarding the second ratio: A/Ao, the theoretical air amount: Ao depends on the amount of the combustible gas and the number of carbons of the raw material gas: n. Therefore, the supply amount of the combustion air may be controlled by changing the number of carbons and the volume flow of the combustible gas, corresponding to the composition of the raw material gas : n.

The above described embodiments may be combined with each other so long as they do not exclude each other.

### Industrial Applicability

A hydrogen generator, an operation method thereof and a fuel cell system of the present invention are useful as a hydrogen generator which is capable of reducing carbon monoxide in a hydrogen-containing gas even when the composition of a raw material gas changes, an operation method thereof, and a fuel cell system.

### Reference Signs List

- 1: hydrogen generator
- 2: fuel cell
- 7: reformer
- 9: selective oxidization unit
- 10: first temperature detector
- 11: raw material supply unit
- 12: raw material flow measuring unit
- 13: water supply unit
- 14: oxidizing gas supply unit
- 15: combustor
- 16: combustion air supply unit
- 17: second temperature detector
- 18: control unit
- 18a: storage section
- 50: removing unit
- 100: fuel cell system

## Claims

1. A hydrogen generator comprising:
a reformer (7) for generating a hydrogen-containing gas through a reforming reaction of a raw material gas and water;
a raw material supply unit (11) for supplying the raw material gas;
a raw material flow measuring unit (12) for measuring a flow of the raw material gas;
a first temperature detector (10) for detecting a temperature of the reformer (7);
a combustor (15) for combusting at least one of the raw material gas and the hydrogen-containing gas which are combustible gases by using air to heat the reformer (7);
a removing unit (8, 9) for removing carbon monoxide from the hydrogen-containing gas through a reaction of carbon monoxide and a reactant gas;
a reactant gas supply unit (13, 14) for supplying the reactant gas; and
a control unit (18);
wherein the control unit (18) is configured to control an amount of the raw material gas supplied from the raw material supply unit (11) such that a first detection temperature detected by the first temperature detector (10) reaches a predetermined temperature, and to control an amount of the reactant gas supplied from the reactant gas supply unit (13, 14), based on the flow of the raw material gas which is measured by the raw material flow measuring unit (12), during control of the amount of the raw material gas, wherein the removing unit (8, 9) includes a shift converter (8) for converting carbon monoxide by using steam, and a selective oxidization unit (9) for oxidizing carbon monoxide by using an oxidizing gas; and
wherein the reactant gas supply unit (13, 14) includes a steam supply unit (13) for supplying the steam, and an oxidizing gas supply unit (14) for supplying the oxidizing gas,
the hydrogen generator further includes a storage section (18a) for storing a measurement flow of the raw material gas during an operation of the hydrogen generator;
**characterized in that**
the control unit (18) is configured to set a reference flow of the raw material gas based on the measurement flow of the raw material gas stored in the storage section (18a), and to control at least one of a supply amount of the steam and a supply amount of the oxidizing gas based on a result of comparison between the measurement flow of the raw material gas and the reference flow.

2. The hydrogen generator according to claim 1, wherein
the reformer (7) is configured to generate the hydrogen-containing gas in a predetermined amount, and the control unit (18) is configured to control at least one of the supply amount of the steam and the supply amount of the oxidizing gas based on the measurement flow of the raw material gas when the generation amount of the hydrogen-containing gas continues to be equal to the predetermined amount for a first predetermined time or longer.

3. The hydrogen generator according to claim 1 or 2, wherein the control unit (18) is configured to store in the storage section (18a) an operation time of the reformer (7) and set the predetermined temperature higher whenever the operation time of the reformer passes a predetermined time.

4. A fuel cell system comprising:
the hydrogen generator (1) according to any one of claims 1 to 3; and
a fuel cell (2) for generating electric power by using the hydrogen-containing gas.

5. The fuel cell system according to claim 4, wherein
the reformer (7) is configured to generate the hydrogen-containing gas in a predetermined amount, and the control unit (18) is configured to control at least one of the supply amount of the steam and the supply amount of the oxidizing gas based on the measurement flow of the raw material gas, when the generation amount of the hydrogen-containing gas continues to be equal to the predetermined amount for a first predetermined time or longer, in a start-up process before the fuel cell (2) generates predetermined electric power.

6. The fuel cell system according to claim 4 or 5, wherein the control unit (18) is configured to control at least one of the supply amount of the steam and the supply amount of the oxidizing gas based on the measurement flow of the raw material gas, when a second predetermined time passes in a power generation step in which the fuel cell (2) is generating predetermined electric power.

7. The fuel cell system according to claim 6, wherein the control unit (18) is configured to set the reference flow of the raw material gas based on the measurement flow of the raw material gas stored in the storage section (18a), to set the electric power to the predetermined electric power when the measurement flow of the raw material gas changes from the reference flow, and to control at least one of the supply amount of the steam and the supply amount of the oxidizing gas based on a result of comparison between the measurement flow of the raw material gas and the reference flow, when the electric power continues to be equal to the predetermined electric power for a second predetermined time or longer.

8. A method of operating a hydrogen generator according to claim 1, the method comprising:
supplying a raw material gas and water to a reformer (7);
generating by the reformer (7), a hydrogen-containing gas through a reforming reaction between the raw material gas and the water;
combusting by a combustor (15), at least one of the raw material gas and the hydrogen-containing gas by using air to heat the reformer (7);
removing by a removing unit (8, 9), carbon monoxide from the hydrogen-containing gas by reacting carbon monoxide with a reactant gas;
controlling an amount of the raw material gas supplied to the reformer (7) such that a temperature of the reformer reaches a predetermined temperature; and
controlling a supply amount of the reactant gas based on the amount of the raw material gas supplied to the reformer (7), during control of the amount of the raw material gas.

## Patentansprüche

1. Wasserstoffgenerator, umfassend:
einen Reformer (7) für die Erzeugung eines wasserstoffhaltigen Gases durch eine Reformreaktion eines Rohmaterialgases und Wasser;
eine Rohmaterialzuführeinheit (11) für das Zuführen des Rohmaterialgases;
eine Rohmaterialfluss-Messeinheit (12) zum Messen eines Flusses des Rohmaterialgases;
einen ersten Temperaturdetektor (10) zum Erfassen einer Temperatur des Reformers (7);
eine Brennkammer (15) für die Verbrennung des Rohmaterialgases und/oder des wasserstoffhaltigen Gases, die brennbare Gase sind, unter Verwendung von Luft, um den Reformer (7) zu erwärmen;
eine Entfernungseinheit (8, 9) für das Entfernen von Kohlenmonoxid aus dem wasserstoffhaltigen Gas durch eine Reaktion von Kohlenmonoxid und einem Reaktionsgas;
eine Reaktionsgas-Zuführeinheit (13, 14) zum Zuführen des Reaktionsgases; und
eine Steuereinheit (18);
wobei die Steuereinheit (18) dazu eingerichtet ist, eine Menge des Rohmaterialgases, das von der Rohmaterialzuführeinheit (11) zugeführt wird, derart zu steuern, dass eine erste Erfassungstemperatur, die von dem ersten Temperaturdetektor (10) erfasst wird, eine vorbestimmte Temperatur erreicht, und eine Menge des Reaktionsgases, das von der Reaktionsgas-Zuführeinheit (13, 14) zugeführt wird, auf der Basis des Flusses des Rohmaterialgases, der durch die Rohmaterialfluss-Messeinheit (12) gemessen wird, während der Steuerung der Menge des Rohmaterialgases zu steuern,
wobei die Entfernungseinheit (8, 9) einen Shift-Konverter (8) für die Konvertierung von Kohlenmonoxid mit Hilfe von Dampf, und eine selektive Oxidationseinheit (9) umfasst, um Kohlenmonoxid mit Hilfe eines Oxidationsgases zu oxidieren; und
die Reaktionsgas-Zuführeinheit (13, 14) eine Dampfzuführeinheit (13) für das Zuführe von Dampf und eine Oxidationsgas-Zuführeinheit (14) für das Zuführen des Oxidationsgases umfasst und
der Wasserstoffgenerator weiterhin einen Speicherabschnitt (18a) für das Speichern eines Messflusses des Rohmaterialgases während eines Betriebs des Wasserstoffgenerators umfasst;
**dadurch gekennzeichnet, dass**
die Steuereinheit (18) dazu eingerichtet ist, einen Bezugsfluss des Rohmaterialgases auf der Basis des Messflusses des Rohmaterialgases einzustellen, das in dem Speicherabschnitt (18a) gespeichert ist, und eine Zuführmenge des Dampfes und/oder eine Zuführmenge des Oxidationsgases auf der Basis eines Vergleichsergebnisses zwischen dem Messfluss des Rohmaterialgases und dem Bezugsfluss zu steuern.

2. Wasserstoffgenerator nach Anspruch 1, bei dem
der Reformer (7) dazu eingerichtet ist, das wasserstoffhaltige Gas in einer vorbestimmten Menge zu erzeugen, und
die Steuereinheit (18) dazu eingerichtet ist, die Zuführmenge des Dampfes und/oder die Zuführmenge das Oxidationsgases auf der Basis des Messflusses des Rohmaterialgases zu steuern, wenn die Erzeugungsmenge des wasserstoffhaltigen Gases damit fortfährt, gleich der vorbestimmten Menge für eine erste vorbestimmte Zeit oder länger zu sein.

3. Wasserstoffgenerator nach Anspruch 1 oder 2, bei dem die Steuereinheit (18) dazu eingerichtet ist, in dem Speicherabschnitt (18a) eine Betriebszeit des Reformers (7) zu speichern und die vorbestimmte Temperatur immer dann höher einzustellen, wenn die Betriebszeit des Reformers eine vorbestimmte Zeit überschreitet.

4. Brennstoffzellensystem, umfassend:
den Wasserstoffgenerator (1) nach einem der Ansprüche 1 bis 3; und
eine Brennstoffzelle (2) für die Erzeugung elektrischen Stroms mit Hilfe des wasserstoffhaltigen Gases.

5. Brennstoffzellensystem nach Anspruch 4, bei dem der Reformer (7) dazu eingerichtet ist, das wasserstoffhaltige Gas in einer vorbestimmten Menge zu erzeugen, und
die Steuereinheit (18) dazu eingerichtet ist, die Zuführmenge des Dampfes und/oder die Zuführmenge des Oxidationsgases auf der Basis des Messflusses des Rohmaterialgases zuzuführen, wenn die Erzeugungsmenge des wasserstoffhaltigen Gases damit fortfährt, gleich der vorbestimmten Menge für eine vorbestimmte Zeit oder länger in einem Startvorgang zu bleiben, bevor die Brennstoffzelle (2) vorbestimmten elektrischen Strom erzeugt.

6. Brennstoffzellensystem nach Anspruch 4 oder 5, bei dem die Steuereinheit (18) dazu eingerichtet ist, die Versorgungsmenge des Dampfes und/oder die Versorgungsmenge des Oxidationsgases auf der Basis des Messflusses des Rohmaterialgases zu steuern, wenn eine zweite vorbestimmte Zeit in einem Stromerzeugungsschritt vorübergeht, in dem die Brennstoffzelle (2) den vorbestimmten elektrischen Strom erzeugt.

7. Brennstoffzellensystem nach Anspruch 6, bei dem die Steuereinheit (18) dazu eingerichtet ist, den Bezugsfluss des Rohmaterialgases auf der Basis des Messflusses des Rohmaterialgases einzustellen, das in dem Speicherabschnitt (18a) gespeichert ist, um den elektrischen Strom auf den vorbestimmten elektrischen Strom einzustellen, wenn sich der Messfluss des Rohmaterialgases gegenüber dem Bezugsfluss ändert, und die Zuführmenge des Dampfes und/oder die Zuführmenge des Oxidationsgases auf der Basis eines Vergleichsergebnisses zwischen dem Messfluss des Rohmaterialgases und dem Bezugsfluss zu steuern, wenn der elektrische Strom damit fortfährt, gleich dem vorbestimmten elektrischen Strom für eine zweite vorbestimmte Zeit oder länger zu sein.

8. Verfahren für den Betrieb eines Wasserstoffgenerators nach Anspruch 1, wobei das Verfahren umfasst:
Zuführen eines Rohmaterialgases und Wasser zu einem Reformer (7);
Erzeugen, durch den Reformer (7), eines wasserstoffhaltigen Gases durch eine Reformreaktion zwischen dem Rohmaterialgas und dem Wasser;
Verbrennen durch eine Brennkammer (15) des Rohmaterialgases und/oder des sauerstoffhaltigen Gases unter Verwendung von Luft, um den Reformer (7) zu erwärmen;
Entfernen durch eine Entfernungseinheit (8, 9) von Kohlenmonoxid aus dem wasserstoffhaltigen Gas durch Reagieren von Kohlenmonoxid mit einem Reaktionsgas;
Steuern einer Menge des Rohmaterialgases, das dem Reformer (7) zugeführt wird, derart, dass eine Temperatur des Reformers eine vorbestimmte Temperatur erreicht; und
Steuern einer Zuführmenge des Reaktionsgases auf der Basis der Menge des Rohmaterialgases, das dem Reformer (7) zugeführt wird, während der Steuerung der Menge des Rohmaterialgases.

## Revendications

1. Générateur d'hydrogène comprenant :
un reformeur (7) destiné à générer un gaz contenant de l'hydrogène par le biais d'une réaction de reformage entre un gaz de départ et de l'eau ;
une unité d'alimentation en matériau de départ (11) destinée à fournir le gaz de départ ;
une unité de mesure de flux de matériau de départ (12) destinée à mesurer un flux du gaz de départ ;
un premier détecteur de température (10) destiné à détecter une température du reformeur (7) ;
une chambre de combustion (15) destinée à brûler l'un au moins parmi le gaz de départ et le gaz contenant de l'hydrogène qui sont des gaz combustibles en utilisant de l'air pour chauffer le reformeur (7) ;
une unité d'élimination (8, 9) pour extraire le monoxyde de carbone du gaz contenant de l'hydrogène par le biais d'une réaction entre le monoxyde de carbone et un gaz réactif ;
une unité d'alimentation en gaz réactif (13, 14) destinée à fournir le gaz réactif ; et
une unité de commande (18) ;
l'unité de commande (18) étant conçue pour réguler une quantité du gaz de départ fournie par l'unité d'alimentation en matériau de départ (11) de telle sorte qu'une première température détectée par le premier détecteur de température (10) atteint une température prédéfinie, et pour réguler une quantité du gaz réactif fournie par l'unité d'alimentation en gaz réactif (13, 14), sur la base du flux de gaz de départ qui est mesuré par l'unité de mesure de flux de matériau de départ (12), pendant la régulation de la quantité du gaz de départ,
l'unité d'élimination (8, 9) incluant un réacteur de conversion (8) pour convertir le monoxyde de carbone au moyen de vapeur, et une unité d'oxydation sélective (9) pour oxyder le monoxyde de carbone au moyen d'un gaz oxydant ; et
l'unité d'alimentation en gaz réactif (13, 14) incluant une unité d'alimentation en vapeur (13) pour fournir la vapeur, et une unité d'alimentation en gaz oxydant (14) pour fournir le gaz oxydant,
le générateur d'hydrogène incluant en outre une section de stockage (18a) pour stocker un flux mesuré du gaz de départ pendant un fonctionnement du générateur d'hydrogène ;
**caractérisé en ce que**
l'unité de commande (18) est conçue pour régler un flux de référence du gaz de départ sur la base du flux mesuré du gaz de départ stocké dans la section de stockage (18a), et pour réguler l'un au moins parmi une quantité fournie de vapeur et une quantité fournie du gaz oxydant sur la base d'un résultat de comparaison entre le flux mesuré du gaz de départ et le flux de référence.

2. Générateur d'hydrogène selon la revendication 1, dans lequel
le reformeur (7) est conçu pour générer le gaz contenant de l'hydrogène en une quantité prédéfinie, et
l'unité de commande (18) est conçue pour réguler l'un au moins parmi une quantité fournie de vapeur et une quantité fournie du gaz oxydant sur la base d'un flux mesuré du gaz de départ lorsque la quantité générée du gaz contenant de l'hydrogène continue d'être égale à la quantité prédéfinie pendant un premier laps de temps prédéfini ou plus longtemps.

3. Générateur d'hydrogène selon la revendication 1 ou 2, dans lequel l'unité de commande (18) est conçue pour stocker dans la section de stockage (18a) une durée de fonctionnement du reformeur (7) et régler la température prédéfinie à une valeur plus élevée dès lors que la durée de fonctionnement du reformeur dépasse une durée prédéfinie.

4. Système de pile à combustible comprenant :
le générateur d'hydrogène (1) selon l'une quelconque des revendications 1 à 3 ; et
une pile à combustible (2) destinée à générer de la puissance électrique au moyen du gaz contenant de l'hydrogène.

5. Système de pile à combustible selon la revendication 4, dans lequel
le reformeur (7) est conçu pour générer le gaz contenant de l'hydrogène en une quantité prédéfinie, et
l'unité de commande (18) est conçue pour réguler l'une au moins parmi la quantité fournie de vapeur et la quantité fournie du gaz oxydant sur la base du flux mesuré de gaz de départ, lorsque la quantité générée du gaz contenant de l'hydrogène continue d'être égale à la quantité prédéfinie pendant un premier laps de temps prédéfini ou plus longtemps, lors d'un processus de démarrage avant que la pile à combustible (2) génère une puissance électrique prédéfinie.

6. Système de pile à combustible selon la revendication 4 ou 5, dans lequel l'unité de commande (18) est conçue pour réguler l'une au moins parmi la quantité fournie de vapeur et la quantité fournie du gaz oxydant sur la base du flux mesuré de gaz de départ, lorsqu'un second laps de temps prédéfini s'écoule lors d'une étape de génération de puissance au cours de laquelle la pile à combustible (2) génère une puissance électrique prédéfinie.

7. Système de pile à combustible selon la revendication 6, dans lequel l'unité de commande (18) est conçue pour régler le flux de référence du gaz de départ sur la base du flux mesuré de gaz stocké dans la section de stockage (18a), afin de régler la puissance électrique à la puissance électrique prédéfinie lorsque le flux mesuré du gaz de départ change par rapport au flux de référence, et pour réguler l'une au moins parmi la quantité fournie de vapeur et la quantité fournie du gaz oxydant sur la base d'un résultat de comparaison entre le flux mesuré du gaz de départ et le flux de référence, lorsque que la puissance électrique continue d'être égale à la puissance électrique prédéfinie pendant un second laps de temps prédéfini ou plus longtemps.

8. Procédé d'exploitation d'un générateur d'hydrogène selon la revendication 1, le procédé comprenant :
la fourniture d'un gaz de départ et d'eau à un reformeur (7) ;
la génération, par le reformeur (7) d'un gaz contenant de l'hydrogène par le biais d'une réaction de reformage entre le gaz de départ et l'eau ;
la combustion, par une chambre de combustion (15), de l'un au moins parmi le gaz de départ et la gaz contenant de l'hydrogène en utilisant de l'air pour chauffer le reformeur (7) ;
l'élimination, par une unité d'élimination (8, 9), du monoxyde de carbone du gaz contenant de l'hydrogène par le biais d'une réaction entre le monoxyde de carbone et un gaz réactif ;
la régulation d'une quantité de gaz de départ fournie au reformeur (7) de telle sorte qu'une température du reformeur atteint une température prédéfinie ; et
la régulation d'une quantité fournie du gaz réactif sur la base de la quantité du gaz de départ fournie au reformeur (7), pendant la régulation de la quantité du gaz de départ.
